# EUROPEAN PATENT APPLICATION

(11) **EP 2 200 203 A2**
(43) Date of publication of application: **23.06.2010**
(21) Application number: 09177843.1
(22) Date of filing: 03.12.2009
(51) Int. Cl.: H04J 14/02

(54) **Optical add/drop multiplexing system, optical add/drop multiplexer and optical pathway detour program**

(30) Priority: 16.12.2008 JP 2008319870
(71) Applicant: Hitachi Ltd., Tokyo 100-8280 (JP)
(72) Inventor: Yamahara, Keiji, Tokyo 100-8220 (JP); Kataoka, Kenjj, Tokyo 100-8220 (JP); Maeda, Shuji, Tokyo 100-8220 (JP); Ihara, Hitoshi, Tokyo 100-8220 (JP); Sugioka, Eriko, Tokyo 100-8220 (JP)
(74) Representative: MERH-IP Matias Erny Reichl Hoffmann

(57) **Abstract**

If opening and deleting of arbitrary optical pathways are repeated in a configuration where plural OADM nodes (100) are connected to each other in a ring manner, empty waves in the ring are fragmented, and thus, it is necessary to optimize the optical pathways (200). When an optical pathway (200) is opened from an OADM node (100) to a different OADM node (100), transponders (102) capable of connecting two routes to the OADM nodes (100) and of setting different wavelengths for two routes are mounted in a state where there are no empty waves on a part of the route, so that an already-opened optical pathway (200) is detoured to a detour route or a different wavelength in the OADM ring, and continuous empty waves are produced in a section to be opened so as to open a new optical pathway (200).

## Description

### BACKGROUND OF THE INVENTION

The present invention relates to an optical add/drop multiplexing system, an optical add/drop multiplexer, and an optical pathway detour program, and particularly to an optical add/drop multiplexing system, an optical add/drop multiplexer, and an optical pathway detour program for realizing a change route of an optical pathway.

With the spread of the Internet, a technique for long-distance transmission of large-volume data has been required. On the other hand, optical fibers have been laid for intercity high-speed data transfer. In addition, for data transfer at a much higher speed, a WDM technique has been spread in which plural optical wavelengths are multiplexed to one optical fiber for transmission.

In the conventional WDM transmission technique, optical signals with specific wavelengths of the multiplexed optical signals are demultiplexed to be output to specific ports. Optical connectors of a multiplex/demultiplex wavelength switch are fixedly assigned to wavelengths, and transponders are coupled to the optical connectors of the multiplex/demultiplex wavelength switch through optical fibers. Thus, the wavelengths of the transponders are fixed.

In the case where an optical pathway is opened from an operating system (OpS) for managing optical pathways, the OpS controls light-emitting operations of optical transmitters of transponders and switch operations of multiplex/demultiplex wavelength switches for routes and wavelengths set to the physically-set transponders, and performs an optical pathway opening operation, as described in Japanese Patent Application Laid-Open No. 2002-198981. Therefore, in order to change an optical pathway to a different route and a different wavelength, it is necessary to switch the connection of an optical fiber connected to the optical connector of the multiplex/demultiplex wavelength switch to a different optical connector.

For this problem, a wavelength select switching technique by which arbitrary wavelengths are demultiplexed has recently been put in practical use for transponders and specific ports capable of freely setting wavelengths on the WDM side (transmission route side). By employing these techniques, the OpS for managing optical pathways can select arbitrary wavelengths when an optical pathway is opened.

However, in the above-described management of pathways described in Japanese Patent Application Laid-Open No. 2002-198981, emptiness or occupation of wavelengths for each WDM section is merely managed, and one of empty waves is merely assigned. In addition, a change route of an already-opened pathway is not considered.

In management of optical pathways of an optical add/drop multiplexer (OADM node) by using wavelength select switches, the wavelength of an optical pathway to be opened can be arbitrarily selected. However, it is impossible to change a wavelength at the OADM node, and it is necessary to equalize wavelengths used in a WDM section ranging from a starting point to an end point of an optical pathway. Therefore, in a state where opening and deleting of optical pathways are repeated, the same wavelength may not be emptied in any sections on a route to be newly opened. That is, an optical pathway cannot be newly opened in this state. Specifically, although the wavelength itself in each section is emptied, an optical pathway cannot be opened, thus reducing the usability of network resources.

Further, there is not provided any means for moving an optical pathway to a different route or a different wavelength in the technique of Japanese Patent Application Laid-Open No. 2002-198981. Accordingly, in order to equalize wavelengths used in a WDM section ranging from a starting point to an end point of an optical pathway to be opened, it is necessary to delete an already-opened optical pathway once, and to perform a change route of the optical pathway, so that a wavelength in the section to be newly opened is emptied.

### SUMMARY OF THE INVENTION

The above-described problem can be solved by an optical add/drop multiplexing system including: a first optical add/drop multiplexer; a second optical add/drop multiplexer; a third optical add/drop multiplexer; and an information processing device for controlling plural optical add/drop multiplexers, wherein a first transponder included in the first optical add/drop multiplexer includes a change device of a transmission wavelength of an optical pathway between the first optical add/drop multiplexer and the second optical add/drop multiplexer, output ports of a second transponder included in the second optical add/drop multiplexer include a first output port connected to the first optical add/drop multiplexer and a second output port connected to the third optical add/drop multiplexer, the second transponder includes an output port selection device, the change device of a transmission wavelength changes a transmission wavelength, and the output port selection device switches the output ports under control of the information processing device.

Further, the present invention can be achieved by an optical add/drop multiplexer including: a first optical amplifier for amplifying a first wavelength-division multiplex signal from a first route direction and a second wavelength-division multiplex signal from a first multiplex/demultiplex wavelength switch; a second optical amplifier for amplifying a third wavelength-division multiplex signal from a second route direction and a fourth wavelength-division multiplex signal from a second multiplex/demultiplex wavelength switch; the first multiplex/demultiplex wavelength switch which separates the wavelength-division multiplex signal from the first optical amplifier into a first through wave and a first drop wave to multiplex a second through wave with a first add wave; the second multiplex/demultiplex wavelength switch which separates the wavelength-division multiplex signal from the second optical amplifier into the second through wave and a second drop wave to multiplex the first through wave with a second add wave; a first transponder which receives an optical signal of the first drop wave; a second transponder which transmits an optical signal of the second add wave; and a supervisory control block which controls the first transponder and the second transponder, wherein the second transponder includes a variable wavelength transponder, and changes the wavelength of the second add wave under control of the supervisory control block.

Further, the present invention can be achieved by an optical add/drop multiplexer including: a first optical amplifier for amplifying a first wavelength-division multiplex signal from a first route direction and a second wavelength-division multiplex signal from a first multiplex/demultiplex wavelength switch; a second optical amplifier for amplifying a third wavelength-division multiplex signal from a second route direction and a fourth wavelength-division multiplex signal from a second multiplex/demultiplex wavelength switch; the first multiplex/demultiplex wavelength switch which separates the wavelength-division multiplex signal from the first optical amplifier into a first through wave and a first drop wave to multiplex a second through wave with a first add wave; the second multiplex/demultiplex wavelength switch which separates the wavelength-division multiplex signal from the second optical amplifier into the second through wave and a second drop wave to multiplex the first through wave with a second add wave; a first transponder which receives an optical signal of the first drop wave; a second transponder which transmits an optical signal of the second add wave; and a supervisory control block which controls the first transponder and the second transponder, wherein the second transponder provides an optical switch with one input and two outputs at an output unit of a transmitter on the transmission route side, and changes a transmission route from the second route direction to the first route direction under control of the supervisory control block.

Further, the present invention can be achieved by a pathway detour program which allows a computer to function as: a device for checking empty waves in a section to be opened; a device for confirming switch states of respective wavelengths of end nodes in the section to be opened; a device for confirming presence or absence of an optical pathway on a detour route side of a wavelength in which the switch is in an off state; a device for determining whether or not a pathway can be opened in the section to be opened; a device for performing a change route for an opened optical pathway into a different wavelength; and a device for opening a pathway in the section to be opened.

According to the present invention, it is possible to increase the number of optical pathways which can be opened, and to enhance the usability of network resources.

### BRIEF DESCRIPTION OF THE DRAWINGS

FIG. 1 is block diagram of an optical network;
FIG. 2 is a hardware block diagram of an OADM;
FIG. 3 is a functional block diagram of an OpS;
FIG. 4 is a hardware block diagram of the OpS;
FIG. 5 is a diagram for explaining a mechanism of multiplexer and demultiplexer of optical waves;
FIG. 6 is a block diagram of an OADM ring network;
FIG. 7 is a diagram for explaining a state in which plural optical pathways are opened in the OADM ring;
FIG. 8 is a diagram for explaining a procedure of performing a change route by detouring an opened optical pathway to the opposite route;
FIG. 9 is a diagram for explaining a procedure of performing a change route by replacing an opened optical pathway with a different wavelength;
FIG. 10 is a first diagram for explaining a procedure of a change route;
FIG. 11 is a second diagram for explaining a procedure of a change route;
FIG. 12 is a third diagram for explaining a procedure of a change route;
FIGS. 13A and 13B are a diagram for explaining mounting of OADM node packages;
FIG. 14 is a diagram for explaining a node connection information table;
FIG. 15 is a diagram for explaining a pathway information table;
FIG. 16 is a diagram for explaining an SW information table;
FIG. 17 is a diagram for explaining a wavelength select switch connection information table;
FIG. 18 is a flowchart of an opening process of a new optical pathway by the OpS; and
FIG. 19 is a detailed flowchart of Step 504 of FIG. 18.

### DETAILED DESCRIPTION OF THE EMBODIMENT

Hereinafter, an embodiment will be described in detail with reference to the drawings. It should be noted that substantially the same constituent elements are given the same reference numerals, and explanations thereof will not be repeated.

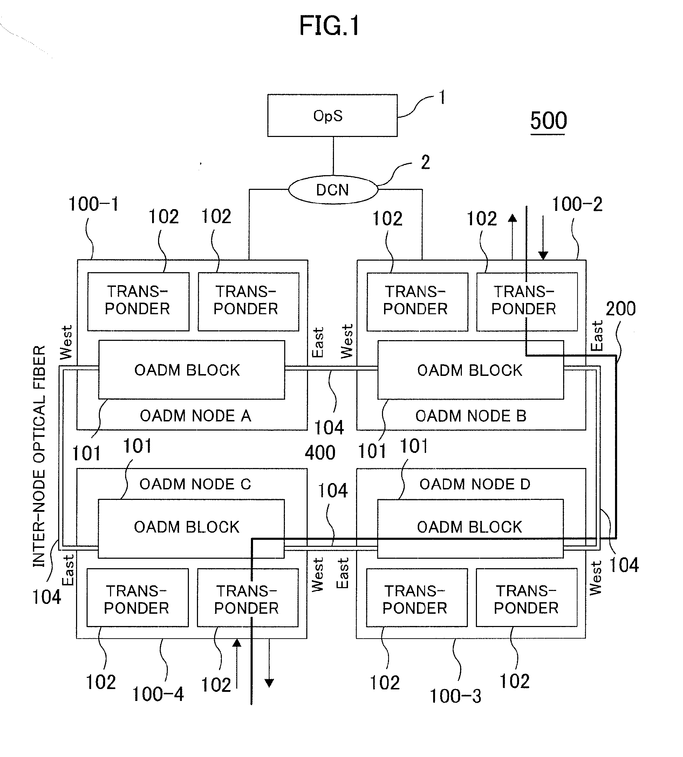

First of all, a configuration of an optical network will be described with reference to FIG. 1. Here, FIG. 1 is a block diagram of an optical network.

In FIG. 1, an optical network 500 includes a Dense Wavelength Division Multiplexing (DWDM) ring network 400, an OpS 1, and a Data Communication Network (DCN) 2. The ring network 400 is configured in such a manner that four Optical Add/Drop Multiplexer (OADM) nodes 100 are connected to each other through inter-node optical fibers 104.

An OADM block 101 and plural transponders 102 are mounted in each OADM node 100. The OpS 1 controls plural OADM nodes 100 to open an optical pathway 200. It should be noted that a client signal input to or output from ports of the transponders 102 includes 10GbE, a GbE signal, STM-64/OC-192, STM-16/OC-48, STM-4/OC-12 and the like.

Each OADM node 100 has an OSC (Optical Supervisory Channel) function exclusively for supervisory control, in addition to a main line. The OpS 1 and the OADM nodes 100 are logically connected as a network in which the OADM nodes 100-1 and 100-2 connected to the DCN 2 serve as gateways. By using the OSC, the OpS 1 performs remote supervisory control for the OADM nodes 100 with the use of a TL1 command and the like.

With regard to two connection ports of each OADM block 101 for the inter-node optical fibers 104, one is defined as "west direction", and the other is defined as "east direction".

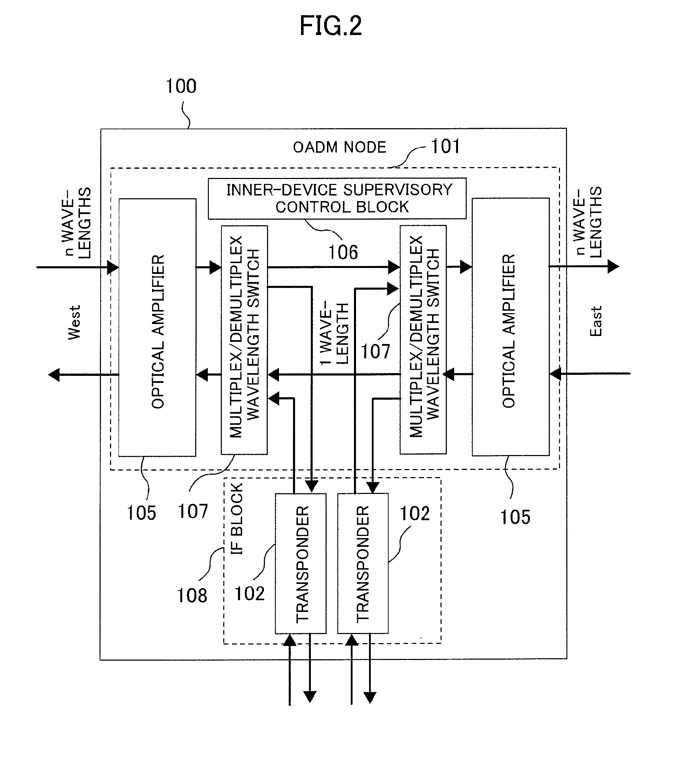

With reference to FIG. 2, a block configuration of an OADM node will be described. Here, FIG. 2 is a hardware block diagram of an OADM. In FIG. 2, the OADM node 100 includes two optical amplifiers 105, two multiplex/demultiplex wavelength switches 107, an IF block 108, and an inner-device supervisory control block 106.

Each optical amplifier 105 collectively amplifies a wavelength-multiplexed optical signal into an optical signal power suitable for transmission between the nodes, without converting the same into an electric signal. Each multiplex/demultiplex wavelength switch 107 separates the wavelength-multiplexed optical signal received from the optical amplifier 105, and drops or adds arbitrary wavelengths. Alternatively, each multiplex/demultiplex wavelength switch 107 performs wavelength multiplexing again after the signal passes therethrough, and transmits the multiplexed signal to the optical amplifier 105. The IF block 108 has one transponder 102 for each wavelength.

Each transponder 102 converts the client signal received from the port into a signal format, an optical signal power, and a wavelength signal appropriate for wavelength multiplexing, and transmits the converted signal to the multiplex/demultiplex wavelength switch 107. Further, each transponder 102 converts an arbitrary wavelength separated by the multiplex/demultiplex wavelength switch 107 into a signal format, an optical signal power, and a wavelength signal appropriate for being connected to an external terminal device, and transmits the converted signal to the port. The inner-device supervisory control block 106 has a function of performing device setting under control of the OpS 1.

Here, the OpS 1 is a general information processing device such as a Personal Computer (PC) or Work Station (WS). The OpS 1 installs therein software for managing the optical pathways 200, and is started by an operator.

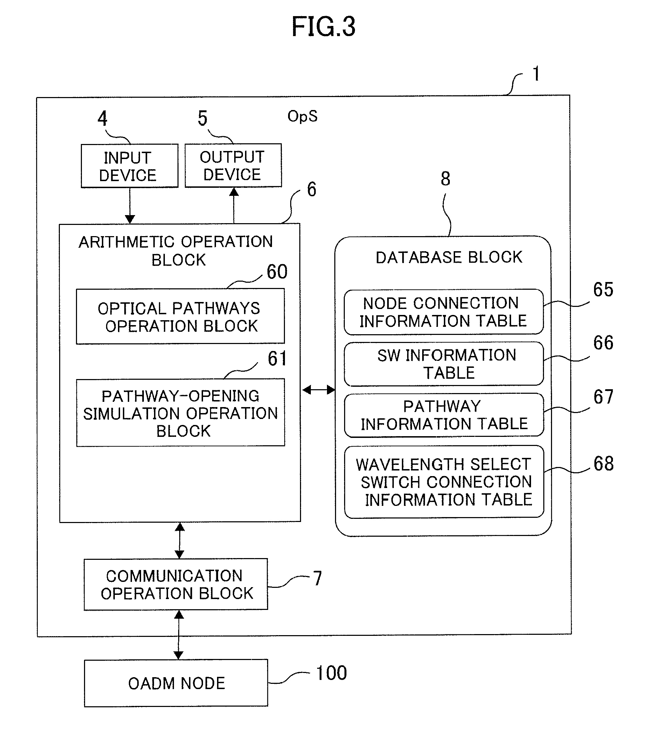

With reference to FIG. 3, a functional block of the OpS will be described. Here, FIG. 3 is a functional block diagram of the OpS. In FIG. 3, the OpS 1 includes an input device 4, an output device 5, an arithmetic operation block 6, a communication operation block 7, and a database block 8. The arithmetic operation block 6 includes an optical pathways operation block 60, and a pathway-opening simulation operation block 61. In addition, the database block 8 holds a node connection information table 65, an SW information table 66, a pathway information table 67, and a wavelength select switch connection information table 68.

An operator operates the input device 4 with reference to the output device 5. The arithmetic operation block 6 allows the optical pathways operation block 60 to perform an optical pathway-opening operation. The arithmetic operation block 6 allows the pathway-opening simulation operation block 61 to perform a pathway-opening simulation operation. The arithmetic operation block 6 sends a control command to the OADM nodes 100 through the communication operation block 7. In addition, the database block 8 holds information necessary for the pathway-opening operation and the pathway-opening simulation operation.

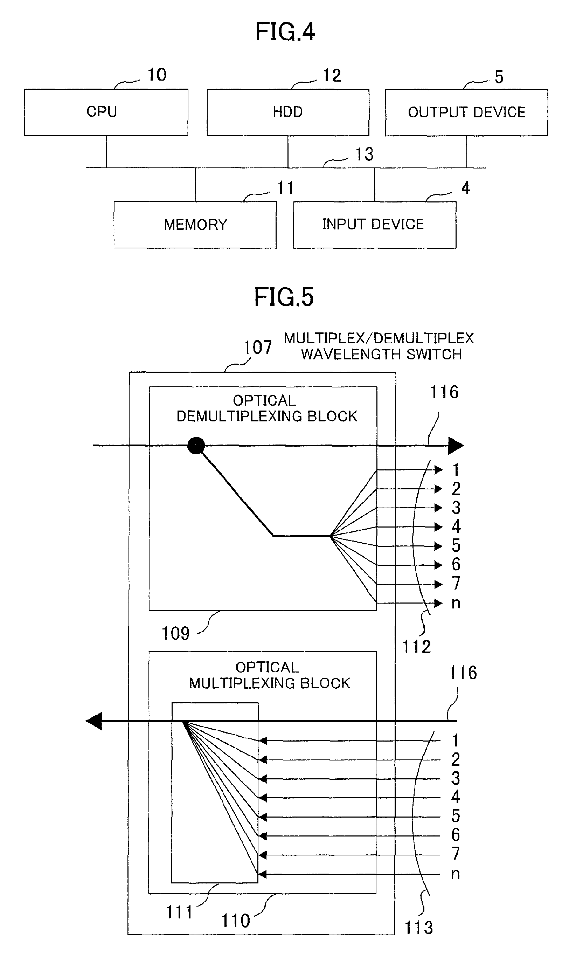

With reference to FIG. 4, a hardware configuration of the OpS will be described. Here, FIG. 4 is a hardware block diagram of the OpS. In FIG. 4, the OpS 1 includes a central processing unit (CPU) 10, a main memory 11, a Hard Disk Drive (HDD) 12 as an auxiliary memory device, the input device 4, and the output device 5, all of which are connected to each other through internal communication lines 13. As will be apparent from the comparison between FIG. 4 and FIG. 3, the optical pathways operation block 60 and the pathway-opening simulation operation block 61 of FIG. 3 are realized by the CPU 10 executing a program held in the memory 11.

With reference to FIG. 5, a configuration of the multiplex/demultiplex wavelength switch configured by a wavelength select switch. Here, FIG. 5 is a diagram for explaining a mechanism of multiplexer and demultiplexer of optical signals. In FIG. 5, the multiplex/demultiplex wavelength switch 107 includes an optical demultiplexing block 109 and an optical multiplexing block 110. The optical multiplexing block 110 multiplexes a through signal 116 with optical signals 113 having different n wavelengths added from the transponder by using a wavelength select switch ADD module 111, and then, outputs the multiplexed signal to the inter-node optical fiber 104 through the optical amplifier 105. The optical demultiplexing block 109 demultiplexes an input wavelength-division multiplex signal into optical signals having arbitrary n wavelengths, and outputs demultiplexed optical signals 112 to the transponder 102.

A transmission optical fiber from the transponder 102 is connected to the optical multiplexing block 110. On the other hand, a reception optical fiber to the transponder 102 is connected to the optical demultiplexing block 109.

Each wavelength passing through the multiplex/demultiplex wavelength switch 107 is in any one of states of add, drop, through, and off. The add/drop state means that the multiplex/demultiplex wavelength switch adds or drops an optical signal from/to the adjacent OADM node into a particular wavelength, and transmits or receives the optical signal to/from the transponder. The through state means that a particular wavelength of an optical signal from the adjacent OADM node is not transmitted or received to/from the transponder, but is transmitted to another adjacent OADM node. The off state means that an optical signal having a particular wavelength is not allowed to pass through.

A signal for the adjacent OADM node is output from the multiplex/demultiplex wavelength switch 107 to the optical amplifier 105. The signal for the adjacent OADM node is amplified by the optical amplifier 105, and then, transmitted to the adjacent OADM node. Since the pump power of the optical signal from the adjacent OADM node decreases, the optical signal is amplified by the optical amplifier 105 to be output to the multiplex/demultiplex wavelength switch 107.

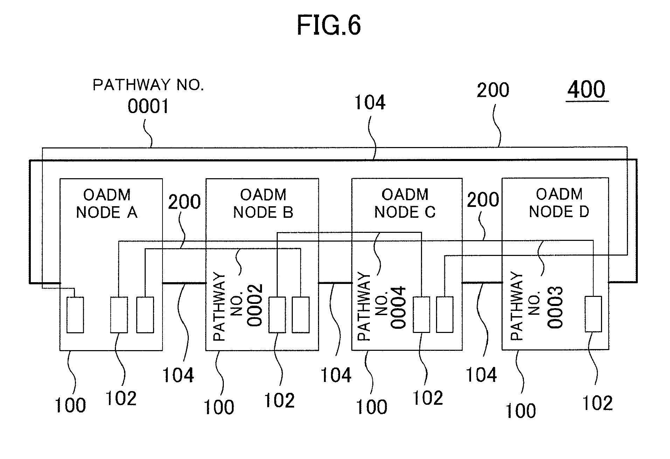

With reference to FIG. 6, the optical pathways of the OADM ring network will be described. Here, FIG. 6 is a block diagram of the OADM ring network. In FIG. 6, the OADM ring network 400 includes four OADM nodes 100. Plural transponders 102 are mounted in each OADM node 100. The transponder 102 set at a particular wavelength in one OADM node 100 is connected to that with the same wavelength in another OADM node 100 on a one-on-one basis. This connection is referred to as an optical pathway 200.

A wavelength-multiplexed optical signal is transmitted through the inter-node optical fiber 104 between the OADM nodes 100. The OADM ring network 400 has four optical pathways (pathway Nos. 0001 to 0004) opened. Three transponders 102 are mounted in the OADM node A. The OADM node A is an end node of the optical pathway No. 0001 connected to the transponder of the OADM node C through the OADM node D, the optical pathway No. 0002 connected to the OADM node B, and the optical pathway No. 0003 connected to the transponder of the OADM node D through the OADM node B and the OADM node C. In addition, the OADM ring network 400 includes the optical pathway No. 0004 connected from the OADM node B to the OADM node C.

Here, the pathway No. 0001 and the pathway No. 0003 pass through the inter-node optical fiber 104 between the OADM node C and the OADM node D. Therefore, it is impossible to set the pathway No. 0001 and the pathway No. 0003 at the same wavelength. As similar to the above, it is impossible to set the pathway No. 0003 and the pathway No. 0004 at the same wavelength. This is similarly applied to the pathway No. 0002 and the pathway No. 0003.

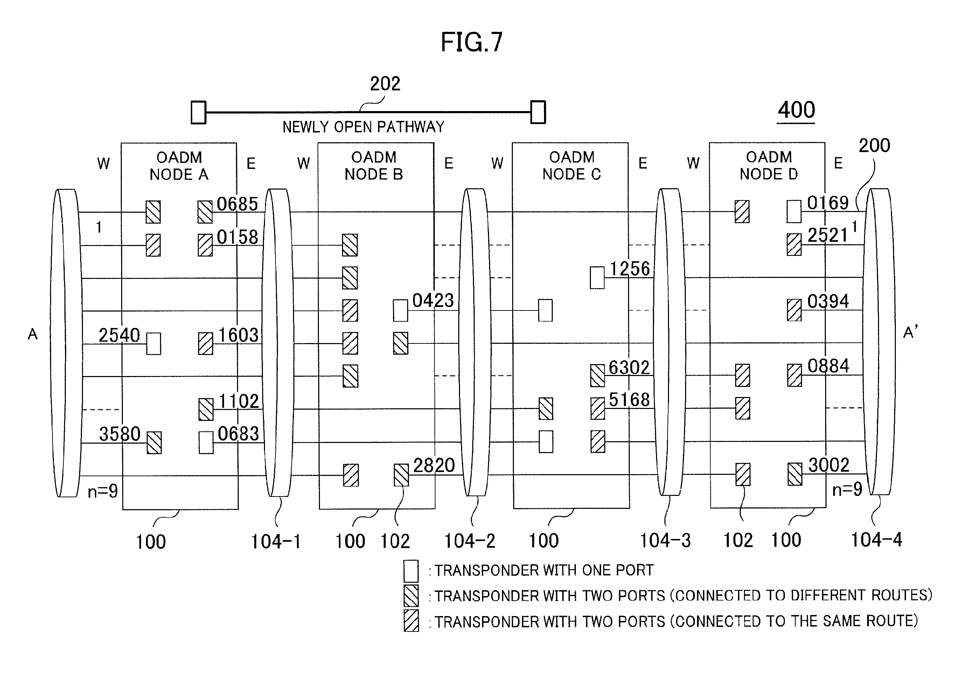

With reference to FIG. 7, there will be described a case in which when an optical pathway is opened from an OADM node to another OADM node, no empty wavelength is present on a part of the route. Here, FIG. 7 is a diagram for explaining a state in which plural optical pathways are opened in the OADM ring. In FIG. 7, A at the left end is connected to A' at the right end through the inter-node optical fiber 104-4. Specifically, the OADM node A to the OADM node D form the OADM network 400. In the OADM network 400, the maximum n wavelengths are multiplexed to be transmitted in the inter-node optical fibers. Boxes in each OADM node represent the transponders 102. Positions of the transponders 102 in the vertical direction correspond to wavelengths. Solid lines connecting between the transponders 102 represent states in which the optical pathways are opened. On the other hand, dashed lines represent states of empty waves. The numbers given to the optical pathways are the pathway numbers, each of which uniquely identifies the optical pathway.

The transponders 102 are illustrated while being distinguished from each other by a difference (1 port or 2 ports) in the number of ports on the OADM block 101 side and by a connection state (different routes or the same route) in the case of 2 ports. Each of the transponders 102A and 102B, each having two ports on the OADM side has a 2x1/1x2 optical switch on the OADM side. In addition, the different routes means that two ports on the OADM side are located on the west and east sides. The same route means that both two ports on the OADM side are located on the west side or on the east side. Among the transponders 102, those having two ports with the different routes are represented as transponders 102A, whereas those having two ports with the same route are represented as transponders 102B.

A variable wavelength optical transponder is disposed at each transponder 102B on the transmission route side. When switching an optical switch of the transponder 102B, the transponder 102B switches a transmission wavelength. If non-instantaneous interruption switching is not considered, the optical switch may not be provided, but only the variable wavelength optical transponder may be provided at the transponder 102B on the transmission route side. In this case, however, it is necessary to change the control of the wavelength select switch of the OADM node on the reception side. In addition, the variable wavelength optical transponder may be disposed at the other transponders 102/102A.

There will be described a case in which a new optical pathway 202 is opened from the OADM node A to the OADM node C through the OADM node B in the OADM ring network 400. Here, no empty waves are present in the inter-node fiber 104-1 between the OADM node A and the OADM node B. Therefore, an optical pathway passing through the OADM node B cannot be opened. Further, on the opposite route passing through the OADM node D, all empty waves of the inter-node fiber 104-4 between the OADM node A and the OADM node D and the inter-node fiber 104-3 between the OADM node D and the OADM node C are different from each other, and thus, an optical pathway 202 cannot be opened.

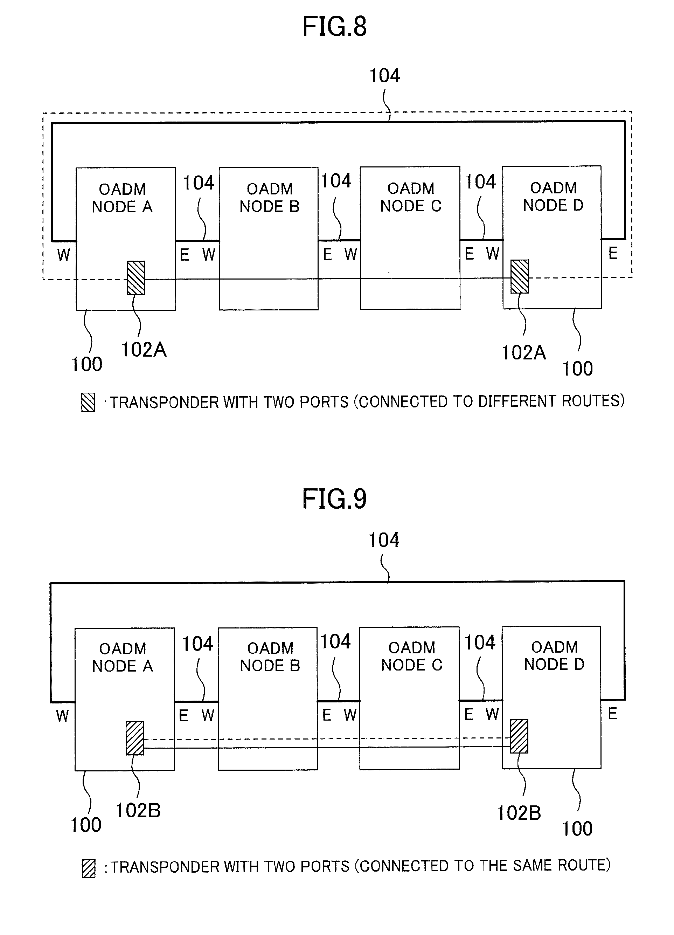

Next, there will be described a procedure of performing a change route of opened optical pathways with reference to FIG. 8 and FIG. 9. Here, FIG. 8 is a diagram for explaining a procedure of performing a change route by detouring an opened optical pathway to the opposite route. FIG. 9 is a diagram for explaining a procedure of a change route by replacing an opened optical pathway with a different wavelength.

In FIG. 8, each of the transponders 102A mounted in the OADM node A and the OADM node D has two ports. Each port can be connected to one of the routes in the east and west directions, and two routes can be set at different wavelengths.

Each of the transponders 102A of the OADM node A and the OADM node D is connected to both of the multiplex/demultiplex wavelength switch connected in the west direction and the multiplex/demultiplex wavelength switch connected in the east direction of the OADM node, and two ports are connected to different routes.

When an optical pathway is opened, two transponders 102A are connected to each other with one port of each transponder (the optical pathway shown by the solid line). In the case of detouring to the opposite route, two transponders 102A open an optical pathway with the other port of each transponder (the optical pathway shown by the dashed line), transmission and reception of a signal are switched to the detour route, and then, the used optical pathway is deleted.

In FIG. 9, the transponder 102B of the OADM node A allows two ports to be connected to the multiplex/demultiplex wavelength switch connected in the east direction. On the other hand, the transponder 102B of the OADM node D allows two ports to be connected to the multiplex/demultiplex wavelength switch connected in the west direction.

When an optical pathway is opened, two transponders 102B are connected to each other with one port of each transponder (the optical pathway shown by the solid line). In the case of a change route, two transponders 102B newly open an optical pathway of a different wavelength with the other port of each transponder (the optical pathway shown by the dashed line), transmission and reception of a signal are switched, and then, the used optical pathway is deleted.

As described above, in the case where an optical pathway cannot be newly opened because some sections of the optical pathway to be opened are occupied by another optical pathway, the already-opened optical pathway is detoured to the opposite route or is switched to a different wavelength on the same route, so that the change route of the optical pathway is performed to open the new optical pathway.

Next, a concrete example of pathway opening realized by the change route of an optical pathway will be described. A detailed operation flows thereof will be described later.

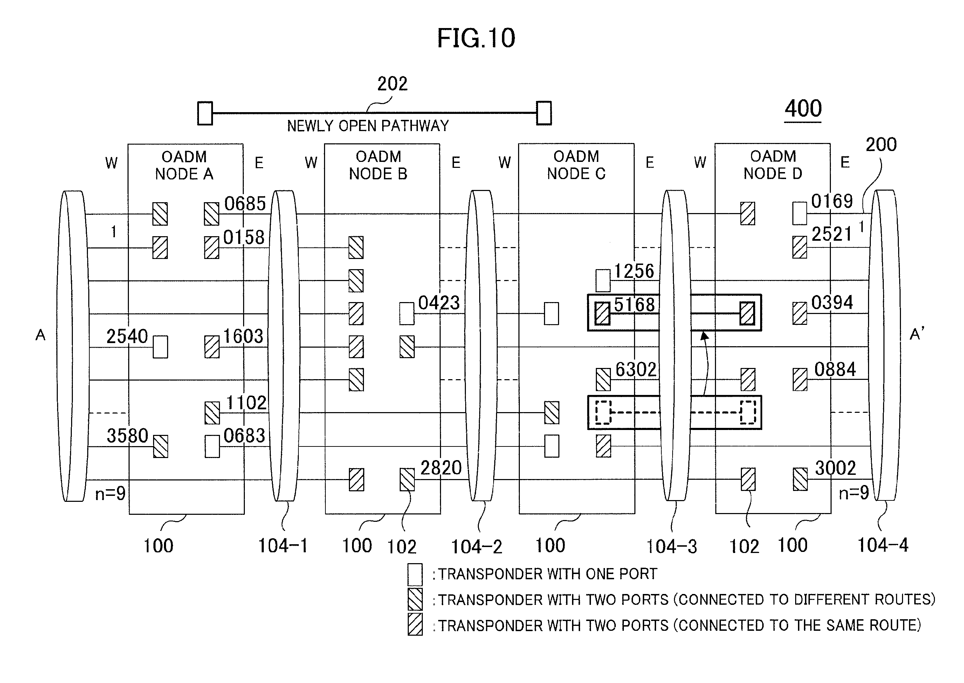

With reference to FIG. 10 to FIG. 12, there will be described an example of the change route performed when the new optical pathway 202 from the OADM node A to the OADM node C through the OADM node B is opened in the OADM ring network of FIG. 7. Here, FIG. 10 to FIG. 12 are diagrams for explaining a procedure of the change route.

Referring back to FIG. 7, all wavelengths are used in the inter-node fiber 104-1 between the OADM node A and the OADM node B. Therefore, empty waves are secured by moving an optical pathway existing at a section to be opened. The target optical pathways to be moved are those passing between the OADM node A and the OADM node B, and between the OADM node B and the OADM node C.

First of all, it is checked, on the basis of the connection states of the ports of the transponders, whether or not an optical pathway which can be detoured to the opposite route is present among the target optical pathways in the node at the end point of a newly open pathway, and it is checked whether or not the target optical pathways can be physically detoured to the opposite direction. In FIG. 10, the target optical pathways to be moved in the OADM node A are those with the pathway Nos. 0685, 0158, 1603, 1102, and 0683. Among them, the optical pathways with the pathway Nos. 0685, 0158, 1603, and 0683 are not connected to the opposite ports of the transponders 102A of the OADM nodes at both end points of the newly open pathway. Accordingly, the optical pathways cannot be physically detoured to the opposite direction. On the other hand, the optical pathway with the pathway No. 1102 can be detoured to the opposite direction because it is connected to the opposite ports of the transponders 102A.

If the optical pathway can be physically detoured, empty states of waves on the detour route are checked. If there is any wavelength to which the optical pathway can be detoured, a detour operation is performed using the wavelength, so that resources for a newly open pathway are secured.

If there is no wavelength to which the optical pathway can be detoured, it is further checked whether or not there is any optical pathway, present on the detour route, which can be switched to a different wavelength on the same route. Then, if the switching can be performed, a detour operation is performed by moving the optical pathway to the different wavelength, so that resources for a newly open pathway are secured.

In FIG. 7, the pathway No. 1102 can be physically detoured. However, the same wavelength is not emptied on the detour route from the OADM node A to the OADM node C through the OADM node D. Therefore, among the optical pathways present on the route, it is checked whether or not there is any optical pathway which can be changed to a different wavelength. Here, the transponders 102B at both ends of the pathway No. 5168 have the connection ports to the same route. Accordingly, the pathway can be changed to a wavelength No. 2 or 4 of the empty wave.

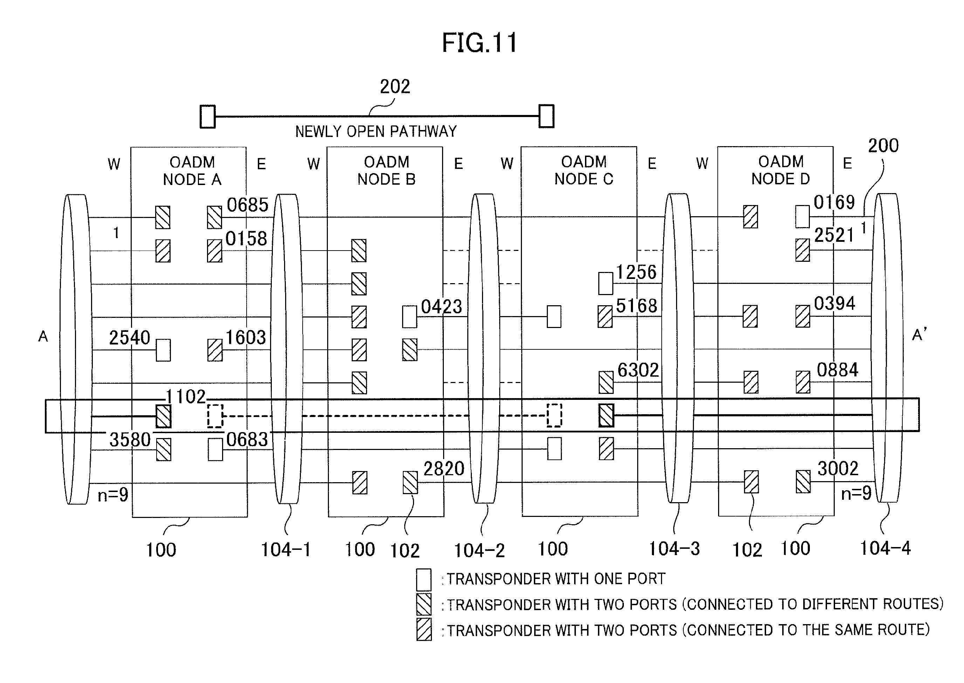

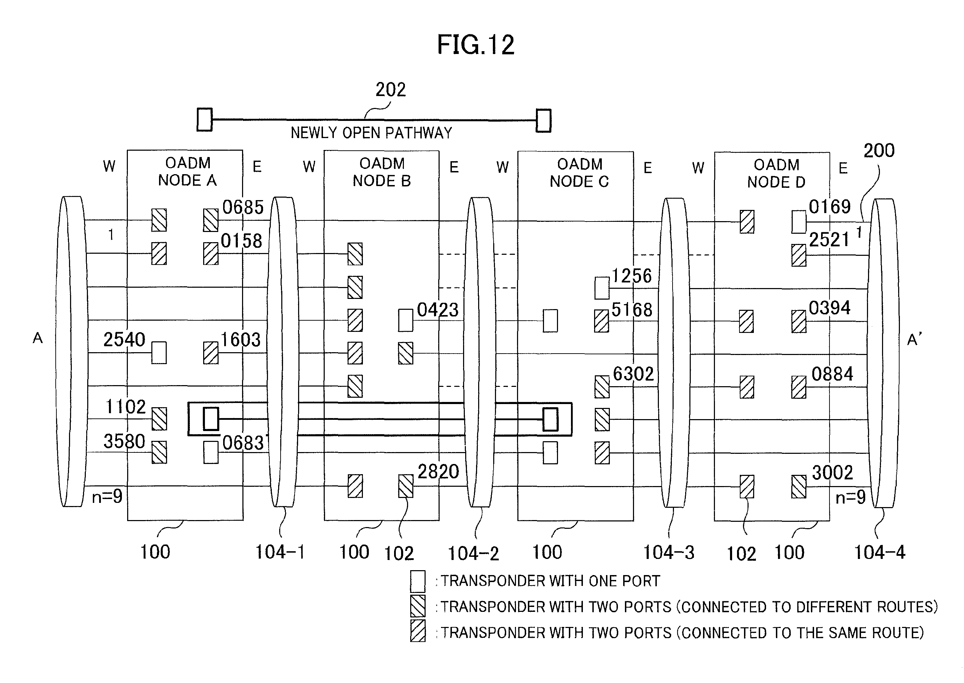

In FIG. 10, in the transponders 102B at both ends of the pathway No. 5168, a transmission wavelength to the transmission route side is moved from a wavelength No. 7 to a wavelength No. 4. As a result, the wavelength No. 7 becomes an empty state. In FIG. 11, in the transponders 102A at both ends of the pathway with the pathway No. 1102, the wavelength select switch is switched to detour the optical pathway to the opposite direction. As a result, the wavelength No. 7 becomes an empty state on the route from the OADM node A to the OADM node C through the OADM node B. In FIG. 12, the new optical pathway 202 from the OADM node A to the OADM node C through the OADM node B is opened using the wavelength No. 7.

These operations are sequentially performed for the optical pathways present on the pathway route to be opened, so that the change route of the optical pathway is performed and resources for a newly open pathway are secured.

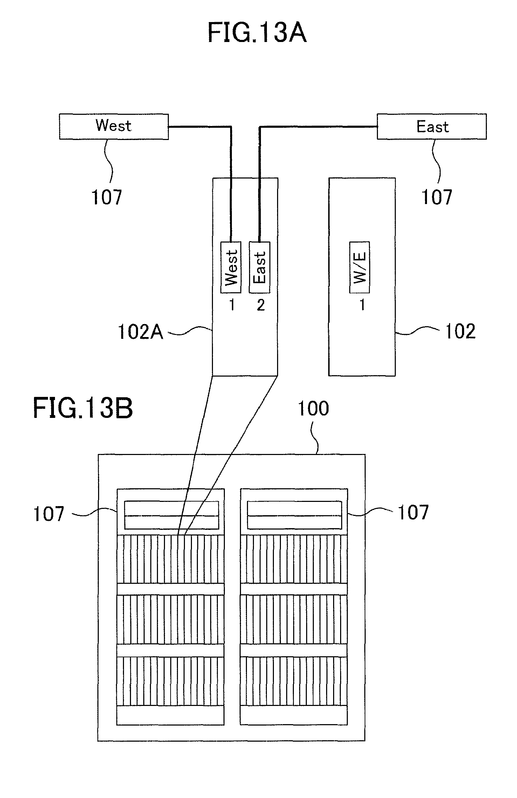

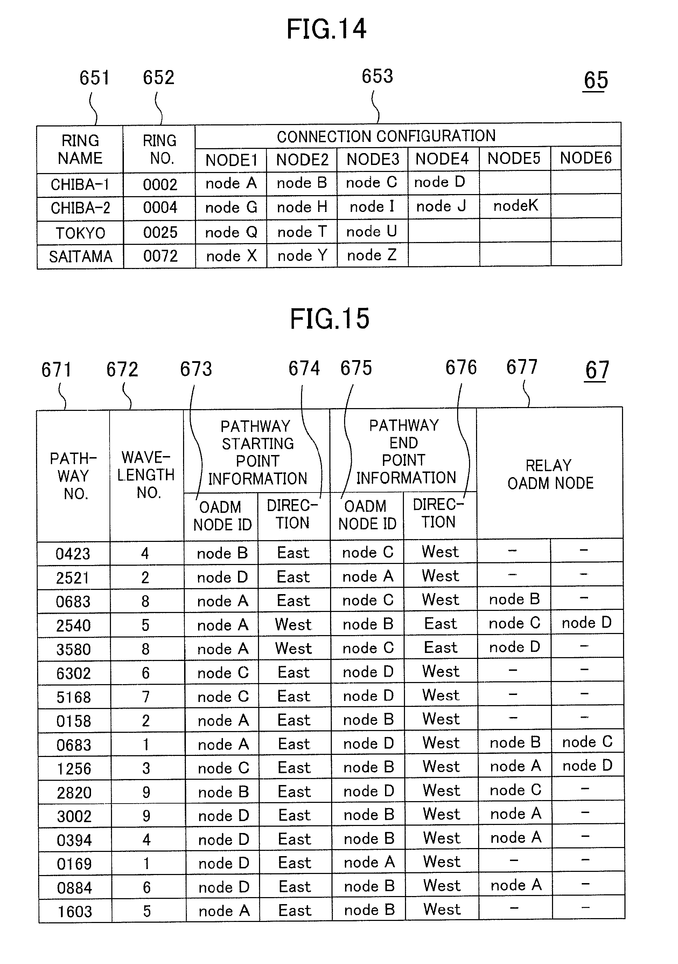

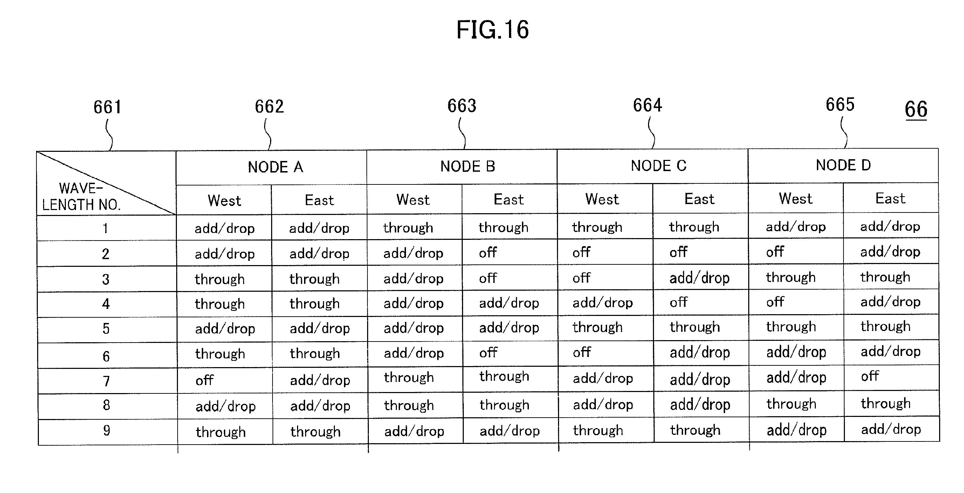

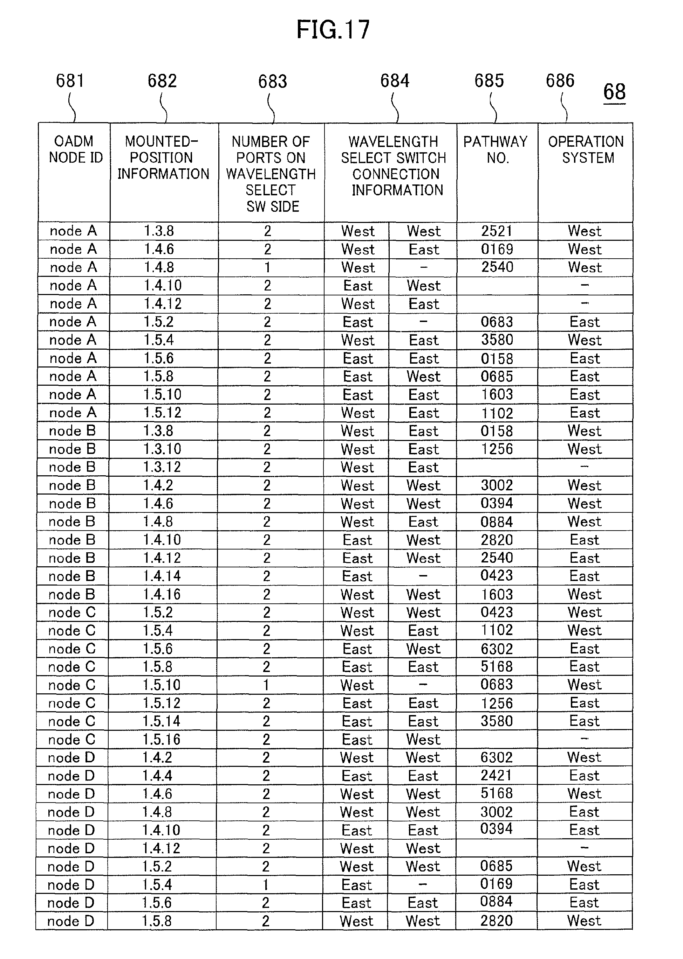

Next, mounting of an OADM node package and content of respective tables used for new pathway-opening operations will be described with reference to FIGS. 13 to 17. Here, FIGS. 13 are a diagram for explaining mounting of OADM node packages. FIG. 14 is a diagram for explaining a node connection information table. FIG. 15 is a diagram for explaining a pathway information table. FIG. 16 is a diagram for explaining an SW information table. FIG. 17 is a diagram for explaining a wavelength select switch connection information table.

In FIG. 13A represents a diagram for explaining connection of the transponder to the multiplex/demultiplex wavelength switch, and FIG. 13B represents a front diagram of the OADM node. In FIG. 13B, the OADM node has a two-shelf configuration, portions illustrated as bookshelves are shelves. Further, each shelf is referred to as a unit. Furthermore, portions illustrated as books are packages in which the components are mounted. Moreover, the multiplex/demultiplex wavelength switches 107 are arranged above the shelves. FIG. 13A is an enlarged diagram of a part of FIG. 13B.

In FIG. 13A, the packages are the transponder 102A and the transponder 102. In front of the transponder 102A, the wavelength select switch-side port (west) and the wavelength select switch-side port (east) are provided, and are connected to the wavelength select switch (west) and the wavelength select switch (east), respectively, through optical fibers. In front of the transponder 102, the wavelength select switch-side ports (west/east) are provided, and are connected to the wavelength select switches (west/east) through optical fibers (not shown). In front of the transponder 102B (not shown), the wavelength select switch-side port (west/east) and the wavelength select switch-side port (west/east) are provided, and are connected to the wavelength select switch (west) and the wavelength select switch (east), respectively, through optical fibers.

Referring back to FIG. 13B, a mounting position of the package is defined by a shelf number, a unit number, and a package number. In the OADM node 100, the shelf on the left side is a shelf 1, and the shelf on the right side is a shelf 2. Further, units 3 to 5 are provided in order from the bottom of the shelf 1. Further, the packages are numbered 1 to 16 in order from the left. Namely, the mounting position of the transponder 102A of FIG. 13A is represented as 1.5.10.

In FIG. 14, the node connection information table 65 is a table which is preliminarily registered by an operator. The node connection information table 65 contains respective fields of a ring name 651, a ring No. 652, and a connection configuration 653 for registering connection information between the OADM nodes. Each of the ring name 651 and the ring No. 652 is information for uniquely identifying the OADM ring 400. In the connection configuration 653 of the OADM nodes, the OADM nodes connected on the east side are sequentially registered from an arbitrary node in the ring.

Specifically, a ring name of Chiba-1 shown in FIG. 14 includes four OADM nodes. The node A of the east side corresponds to the node B, the node B on the east side corresponds to the node C, the node C on the east side corresponds to the node D, and the node D on the east side corresponds to the node A. As described above, by registering the node connection information table 65, the OpS 1 recognizes connection states of the OADM nodes connected on the east side and on the west side in the OADM ring 400. In FIG. 15, the pathway information table 67 manages information of opened optical pathways. The pathway information table 67 contains fields of a pathway No. 671, a wavelength No. 672, an OADM node ID 673 of a starting point of a pathway, a starting point direction 674 of a pathway, an end-point OADM node ID 675, an open direction 676 of a pathway viewed from an end-point OADM node, and a relay OADM node 677.

The pathway No. 671 is an ID for uniquely determining an optical pathway and is generated and set by the OpS 1 when a pathway is opened. The wavelength No. 672 is a wavelength used by the optical pathway. The OADM node IDs 673 and 675 are OADM nodes accommodating transponders at the ends of the optical pathway. The pathway direction 674 and 676 manage the directions (east/west) of the optical pathway from the OADM nodes which terminates the optical pathway. The relay OADM node 677 is a list of the OADM node IDs which relay the optical pathways. It should be noted that the pathway information table 67 in FIG. 15 shows a state of FIG. 7.

In FIG. 16, the SW information table 66 contains a wavelength No. 661 and fields 662 to 665 in which switch states in the east direction and the west direction are set to the respective OADM nodes existing in the OADM ring.

The switch states manage any one of the states of add/drop, through, and off. The add state means that an optical signal is transmitted from the transponder to the optical multiplexing block of the multiplex/demultiplex wavelength switch. The drop state means that an optical signal is transmitted from the optical demultiplexing block of the multiplex/demultiplex wavelength switch to the transponder. The through state means that an optical signal is allowed to pass through the east side and the west side of the wavelength select switch from the west side and the east side thereof, respectively. The off state means that an optical signal is not allowed to pass through. It should be noted that the SW information table 67 in FIG. 16 shows a state of FIG. 7.

In FIG. 17, the wavelength select switch connection information table 68 contains respective fields of an OADM node ID 681, a mounted-position information 682 of the transponder, the number 683 of ports on the wavelength select switch side, wavelength select switch connection information 684, a pathway No. 685, and an operation system route 686.

The OADM node ID 681 and the mounted-position information 682 specify the mounted position of the transponder 102. The number 683 of ports on the wavelength select switch side indicates the number of ports connectable from the transponder to the wavelength select switch. The change route to a detour route is possible in the case of two ports, but is impossible in the case of one port. The wavelength select switch connection information 684 indicates the wavelength select switch connected to the transponder. The wavelength select switch connection information 684 can register two routes for the transponder having two ports mounted, and only one route can be registered. In this case, the other route is unused. The pathway No. 685 is the same as the pathway No. 671 of the pathway information table 67. The operation system 686 indicates the multiplex/demultiplex wavelength switch 107 operated by the transponder 102.

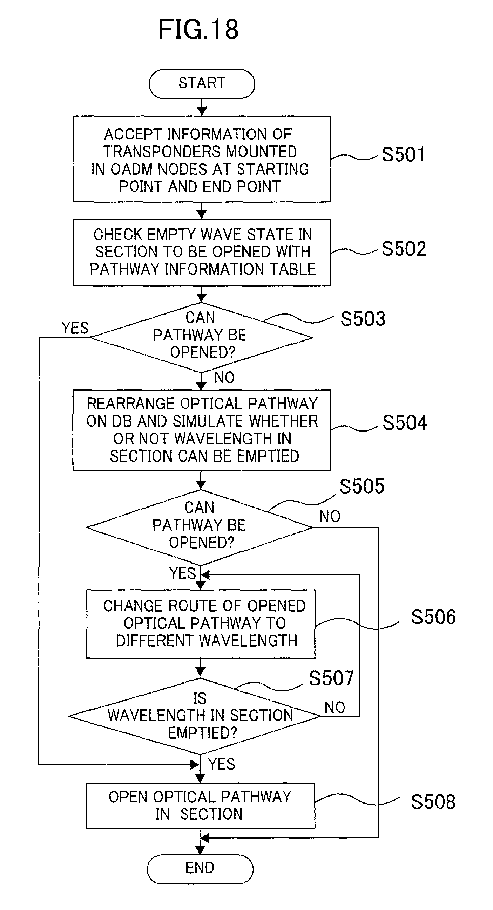

Next, with reference to FIG. 18, a flow of an opening process of a new optical pathway by the OpS will be described. Here, FIG. 18 is a flowchart of an opening process of a new optical pathway by the OpS. In FIG. 18, the OpS 1 accepts information of OADM nodes at the starting point and the end point of a pathway to be opened and the transponders from an operator (S501).

The OpS 1 refers to the pathway information table 67 and the wavelength select switch connection information table stored in the database block 8. Further, the OpS 1 checks whether or not the transponder mounted in the OADM node specified when a new optical pathway is opened is used by another optical pathway by referring to the OADM node IDs 673 and 675, the relay OADM node ID 677, and the wavelength No. 672 of the pathway information table 67, and checks empty waves in the section to be opened (S502). The OpS 1 determines whether or not a new optical pathway can be opened (S503). If an empty wave is present (S503: YES), the OpS 1 uses the empty wave to open an optical pathway (S508), and the flow is completed.

If no empty wave is present (S503: NO), the OpS 1 rearranges the optical pathway on the DB to simulate whether or not the wavelength in the section can be emptied (S504). The OpS 1 determines whether or not a new optical pathway can be opened on the basis of the result of the simulation (S505). If the pathway can be opened (S505: YES), the OpS 1 performs the change route of the opened optical pathway (S506). The OpS 1 confirms whether or not all wavelengths in the section where a new optical pathway is to be opened are emptied (S507). If all wavelengths are emptied (YES), the OpS1 opens a new optical pathway (S508), and a flow is completed. If no wavelengths in the section where a new optical pathway is to be opened are emptied (S507: NO), the OpS 1 performs the change route of the opened optical pathway again (S506). If a new optical pathway cannot be opened in S505 (NO), the OpS 1 terminates the process.

Specifically, in search of a detour route in the case where an optical pathway is to be opened in the section from the node A to the node C through the node B, the OpS 1 confirms the switch states of the respective wavelengths on the east side of the node A from the wavelength No. 1 in order in the SW information table 66 (FIG. 16). In the case of the add/drop state, the OpS 1 confirms the switch states of the respective wavelengths on the west side of the node A. Only when the switches of the respective wavelengths on the west side are in the off states, the wavelengths become possible detour routes. In the SW information table 66, the switch of the wavelength No. 7 on the west side of the node A is in the off state.

Next, the OpS 1 checks the switch states of all nodes on the detour route in the wavelength number where the switches of the wavelength are in the off states. If an optical pathway is present on the detour route, the OpS 1 confirms whether or not the route can be changed to a different wavelength by referring to the wavelength select switch connection information table 66 for the optical pathway. In the SW information table 66, the OpS 1 confirms the switch states of the wavelength No. 7 of the node D and the node C. In the SW information table 66, the node D on the west side and the node C on the east side are in the add/drop states.

By referring to the wavelength select switch connection information table 68, the OpS 1 can recognize that one transponder of the node C is provided with two ports on the east side, one transponder of the node D is provided with two ports on the west side, and they have the same pathway No. 5168. The OpS 1 confirms the switch states on the west side of the node D from the wavelength No. 1. If the switch is in the off state, the OpS 1 confirms the switch state on the east side of the next node in the wavelength number. In the SW information table 66, the wavelength Nos. 2 and 4 on the west side of the node D are in the off states, so that the OpS 1 confirms the switch states of the wavelength Nos. 2 and 4 on the east side of the node C. Here, the switches of the wavelength Nos. 2 and 4 on the east side of the node C are in the off states, so that the OpS 1 can recognize that the pathway can be shifted to the wavelength 2 or 4. Finally, the OpS 1 can empty the wavelength of the wavelength No. 7 from the node A to the node C through the node B, and can open a new optical pathway.

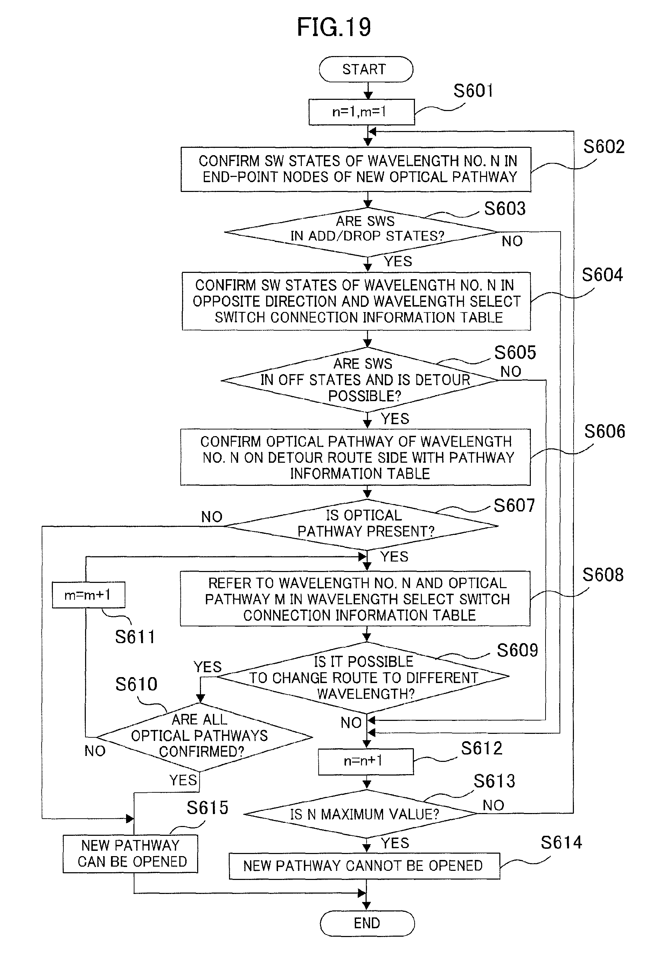

With reference to FIG. 19, a flow of a new pathway opening simulation by detouring an optical pathway will be described. Here, FIG. 19 is a detailed flowchart of Step 504 of FIG. 18. The concrete method is as shown in Figs. 10 and 11. It should be noted that a detour to the opposite direction is limited to the same wavelength for simplification of the operation. However, if the variable wavelength optical transponders are used, the detour operation is not limited to the same wavelength.

In FIG. 19, the OpS 1 initially sets counters n and m for a loop operation at 1 (S601). Here, n is a counter of wavelengths, and m is a counter of pathways. Next, the OpS 1 confirms the switch state of a wavelength No. n of the end-point node of a new optical pathway by using the SW information table 68 (FIG. 17) (S602). The OpS1 determines whether or not the switch is in the add/drop state (S603). If the add/drop is not recorded in the SW information management table 68 (S603: NO), the OpS 1 adds 1 to the counter n because the node is not an end-point of the optical pathway (S612), to determine whether or not n is the maximum value (S613). If n is not the maximum value (S613: NO), the OpS 1 returns to Step 602. If n is the maximum value (S613: YES), the change route of the optical pathway cannot be performed. Accordingly, the result of the simulation shows that a new pathway cannot be opened (S614), and the flow is completed.

If the add/drop is recorded in the information management table in Step 603 (YES), the OpS 1 confirms the SW state of the wavelength No. n in the opposite direction by using the SW information management table 66, and refers to the wavelength select switch connection information table 68 to confirm the connection state of the transponder of the optical pathway (S604). The OpS 1 determines whether or not the switch is in the off state and a detour can be performed (S605). If the result of the confirmation shows that the switch is not in the off state or the opposite port of the transponder of the optical pathway is not connected (S605: NO), 1 is added to the counter n (S612) to determine whether or not n is the maximum value (S613). If n is not the maximum value, the SW state of the wavelength No. n of the end-point node of the new optical pathway is confirmed again (S602).

If the result of the confirmation in Step 605 shows that the switch is in the off state and the opposite port of the transponder of the optical pathway is connected (YES), the OpS 1 confirms the optical pathway on the detour route side of the wavelength No. n by using the pathway information table (S606). The OpS 1 determines whether or not any optical pathway on the detour route side is present (S607). If no optical pathway is present (S607: NO), the OpS1 determines that a new pathway can be opened (S615), and the simulation is completed.

The result of the determination on presence or absence of an optical pathway on the detour route side shows that if an optical pathway is present (S607: YES), the OpS 1 refers to the wavelength No. n and the optical pathway m in the wavelength select switch connection information table 68 (S608). On the basis of the result of the reference of the wavelength No. n and the optical pathway m in the wavelength select switch connection information table, the OpS 1 determines whether or not the optical pathway m can be changed to a different wavelength (S609).

If the wavelength cannot be changed (S609: NO), the OpS 1 adds 1 to the counter n (S612) to determine whether or not n is the maximum value (S613). If n is not the maximum value, the SW state of the wavelength No. n of the end-point node of the new optical pathway is confirmed again (S602). If n is the maximum value, the OpS 1 cannot perform the change route of the optical pathway. Accordingly, the result of the simulation shows that a new pathway cannot be opened (S614), and the simulation is completed.

If the wavelength can be changed in Step 609 (YES), all optical pathways with the wavelength No. n can be changed to a different wavelength (S610). If another optical pathway with the wavelength No. n is present (S610: NO), 1 is added to m (S611), and the wavelength No. n and the optical pathway m in the wavelength select switch connection information table are referred to again (S608). When all optical pathways are confirmed in Step 610, the OpS 1 determines that a new optical pathway can be opened (S615) to terminate the flow.

According to the embodiment, it is possible to increase the number of optical pathways which can be opened, and to enhance the usability of network resources.

## Claims

1. An optical add/drop multiplexing system comprising:
a first optical add/drop multiplexer (100);
a second optical add/drop multiplexer (100);
a third optical add/drop multiplexer (100); and
an information processing device (OpS1) for controlling a plurality of optical add/drop multiplexers (100),
wherein a first transponder (102) included in the first optical add/drop multiplexer includes a change device of a transmission wavelength of an optical pathway (200) between the first optical add/drop multiplexer and the second optical add/drop multiplexer,
output ports of a second transponder (102) included in the second optical add/drop multiplexer include a first output port connected to the first optical add/drop multiplexer and a second output port connected to the third optical add/drop multiplexer,
the second transponder (102) includes an output port selection device, and
the change device of a transmission wavelength changes a transmission wavelength, and the output port selection device switches the output ports under control of the information processing device (OpS1).

2. An optical add/drop multiplexer comprising:
a first optical amplifier (105) for amplifying a first wavelength-division multiplex signal from a first route direction and a second wavelength-division multiplex signal from a first multiplex/demultiplex wavelength switch (107);
a second optical amplifier (105) for amplifying a third wavelength-division multiplex signal from a second route direction and a fourth wavelength-division multiplex signal from a second multiplex/demultiplex wavelength switch (107);
the first multiplex/demultiplex wavelength switch (107) which separates the wavelength-division multiplex signal from the first optical amplifier (105) into a first through wave and a first drop wave to multiplex a second through wave with a first add wave;
the second multiplex/demultiplex wavelength switch (107) which separates the wavelength-division multiplex signal from the second optical amplifier (105) into the second through wave and a second drop wave to multiplex the first through wave with a second add wave;
a first transponder (102) which receives an optical signal of the first drop wave;
a second transponder (102) which transmits an optical signal of the second add wave; and
a supervisory control block (106) which controls the first transponder (102) and the second transponder (102),
wherein the second transponder (102) includes a variable wavelength transponder, and changes the wavelength of the second add wave under control of the supervisory control block.

3. The optical add/drop multiplexer according to claim 2,
wherein the second transponder (102) provides an optical switch with one input and two outputs at an output unit of the variable wavelength transponder, and changes a transmission route to the second route direction under control of the supervisory control block (106).

4. An optical add/drop multiplexer comprising:
a first optical amplifier (105) for amplifying a first wavelength-division multiplex signal from a first route direction and a second wavelength-division multiplex signal from a first multiplex/demultiplex wavelength switch (107);
a second optical amplifier (105) for amplifying a third wavelength-division multiplex signal from a second route direction and a fourth wavelength-division multiplex signal from a second multiplex/demultiplex wavelength switch (107);
the first multiplex/demultiplex wavelength switch (107) which separates the wavelength-division multiplex signal from the first optical amplifier (105) into a first through wave and a first drop wave to multiplex a second through wave with a first add wave;
the second multiplex/demultiplex wavelength switch (107) which separates the wavelength-division multiplex signal from the second optical amplifier (105) into the second through wave and a second drop wave to multiplex the first through wave with a second add wave;
a first transponder (102) which receives an optical signal of the first drop wave;
a second transponder (102) which transmits an optical signal of the second add wave; and
a supervisory control block (106) which controls the first transponder (102) and the second transponder (102),
wherein the second transponder (102) provides an optical switch with one input and two outputs at an output unit of a transmitter on the transmission route side, and changes a transmission route from the second route direction to the first route direction under control of the supervisory control block (106).

5. The optical add/drop multiplexer according to claim 4,
wherein the transmitter on the transmission route side is a variable wavelength transponder, and changes a transmission wavelength to the first route direction under control of the supervisory control block (106).

6. A pathway detour program which allows a computer to function as:
a device for checking empty waves in a section to be opened;
a device for confirming switch states of respective wavelengths of end nodes in the section to be opened;
a device for confirming presence or absence of an optical pathway on a detour route side of a wavelength in which the switch is in an off state;
a device for determining whether or not a pathway can be opened in the section to be opened;
a device for performing a change route for an opened optical pathway into a different wavelength; and
a device for opening a pathway in the section to be opened.
